# EUROPEAN PATENT SPECIFICATION

(11) **EP 3 297 450 B1**
(45) Date of publication and mention of the grant of the patent: **24.01.2024**
(21) Application number: 15892785.5
(22) Date of filing: 01.10.2015
(51) Int. Cl.: A23F 3/18, A23F 3/34, A23F 5/24, A23F 5/26, A23L 2/56, A47J 31/00

(54) **PROCESS FOR PRODUCING BARLEY TEA**
VERFAHREN ZUR HERSTELLUNG VON GERSTENTEE
PROCÉDÉ DE PRODUCTION DE THÉ D'ORGE

(30) Priority: 18.05.2015 JP 2015101139; 21.05.2015 JP 2015103712
(43) Date of publication of application: 28.03.2018
(73) Proprietor: The Coca-Cola Company, Atlanta, GA 30313 (US)
(72) Inventor: WATANABE, Akira, Topkyo-to (JP); NAGAYASU, Machiko, Tokyo-to (JP); TACHIBANA, Yoshihisa, Tokyo-to (JP)
(74) Representative: Dehns
(86) International application number: PCT/US2015/053470
(87) International publication number: WO 2016/186686

(56) References cited:
- EP-A1- 1 452 095
- JP-A- 2004 267 078
- JP-A- 2004 359 249
- JP-A- 2006 042 742
- JP-A- 2006 042 742
- JP-A- 2013 111 030
- US-A1- 2011 014 347
- US-A1- 2011 081 457
- US-A1- 2013 177 672
- US-B2- 7 771 764
- PARK ET AL.: 'Physical properties and rheology effecting on barley tea extraction' KOREAN JOURNAL OF FOOD & NUTRITION vol. 4, no. 1, 1991, pages 61 - 67, XP009504657

## Description

### TECHNICAL FIELD

The present invention relates to a process for producing tea.

### BACKGROUND OF THE INVENTION

When producing a coffee drink for example, hot water is poured into ground coffee beans in an extraction device, and a liquid extract is extracted (see, for example, JP 2005-16969 A and JP 3827079 B). Similarly, when producing black tea, barley tea, green tea or oolong tea, hot water, etc., is poured into tea leaves, and a liquid extract is extracted (see, for example, JP 2003-79350 A; JP 2014-18181 A; JP 4168260 B; and Hiroyuki Suganuma, et al., "The Blood Fluidity Improving Action of Pyrazines Which Are Flavor Constituents of The Barley Tea", Aroma Research, 2002, Vol. 3, No. 10, pp. 38-41). The step of extracting these drinks is a step which has an important effect on the taste and aroma of the drinks. JP 2013 111030 describes a process for producing barley tea, wherein an extraction liquid has a temperature of about 135°C. US 2013/1776672 discloses high pressure extraction techniques for liquid extracts and beverages. Pressure of about 200 MPa are used.

The size of the ground plant starting material used in producing RTD (ready to drink) drinks needs to consider the ease of stable production on an industrial scale, and therefore, generally is rougher than that used in producing non-RTD drinks. Consequently, the percentage yield of the liquid extract may be lowered, or production time may become long. In addition, if production time becomes long, astringency and off flavors increase, and there is the danger that desirable properties will be adversely affected. Therefore, a process which enables efficient extraction of liquid extract, etc., irrespective of the size of the ground plant starting material, is required.

### SUMMARY OF THE INVENTION

In a first aspect of the invention, there is provided a process for producing tea according to claim 1.

In extracting a liquid extract from the aforementioned process, pressure may be applied such that the treatment liquid does not boil in extracting the liquid extract.

In the aforementioned process for producing tea, the tea that is produced can be barley tea or a tea blend. In addition, in the aforementioned process for producing tea, the barley tea starting material can include unground barley tea starting material.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic drawing of a system for producing a liquid extract.
Fig. 2 is a schematic drawing of the extraction device.
Fig. 3 is a graph showing the relationship between the weight of liquid extract and percentage yield of dry matter according to Example 1 of a first embodiment of the present invention.
Fig. 4 is a graph showing the relationship between the weight of liquid extract and percentage yield of dry matter according to Example 2 of the first embodiment of the present invention.
Fig. 5 is a graph showing the relationship between the weight of liquid extract and percentage yield of dry matter according to Example 3 of the first embodiment of the present invention.

### DETAILED DESCRIPTION

In the descriptions of the drawings below, components which are the same or analogous are represented by the same or analogous symbols. However, the drawings are schematic. Therefore, the specific dimensions thereof, etc., should be judged with reference to the descriptions below. In addition, there are of course also components with dimensional relationships or ratios between them which differ from those in the drawings.

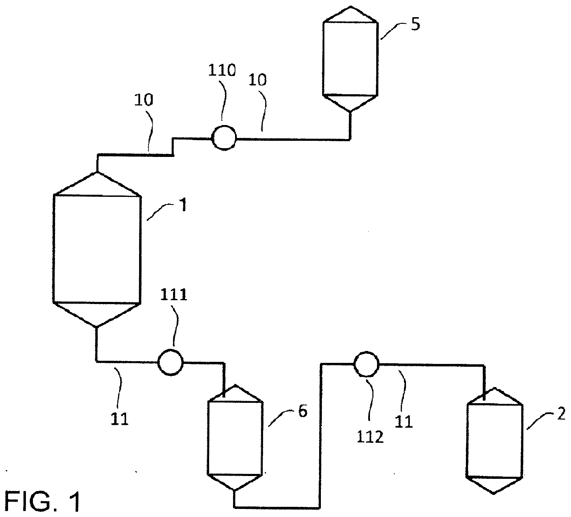

A process for producing a liquid extract can be carried out by a liquid extract production system such as that shown in Figure 1. Such a process and system can be comprised as a part of an embodiment of the invention as described below. The extract production system is provided with an extraction device (1) which extracts a liquid extract from plant starting material, and a treatment liquid tank (5) which is connected to the extraction device (1) via a flow path (10), and stores treatment liquid supplied to the extraction device (1), and a liquid extract tank (2) which is connected to the extraction device (1) via a flow path (11) and stores the liquid extract extracted by the extraction device (1).

The treatment liquid tank (5) stores the treatment liquid used when the extraction device (1) extracts a liquid extract from plant starting material. The treatment liquid is, for example, hot water. The hot water can be pure water, natural water, or deoxygenated water, etc., and it can include solutes. Flow path (10) is, for example, a pipe. Flow path (10) has a liquid transfer pump (110) for transferring treatment liquid from the treatment liquid tank (5) to the extraction device (1). In addition, flow path (10) can have a heat exchanger, etc., in order to control the temperature of the treatment liquid.

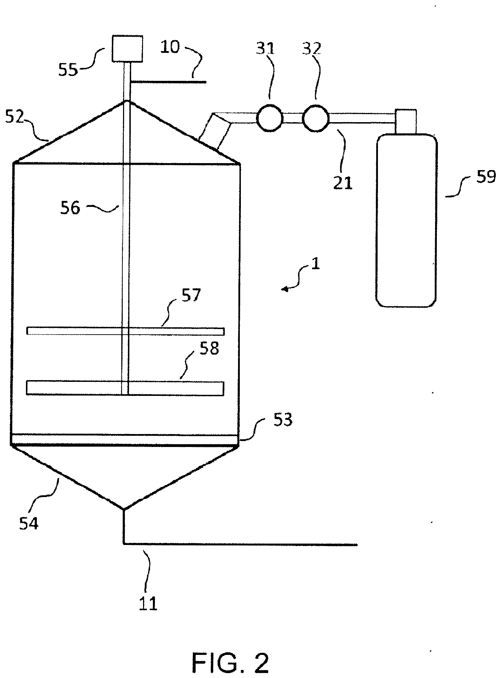

As indicated in Figure 2, for example, the extraction device (1) is provided with a cylindrical barrel component (51), and an upper cap component (52) which covers the upper opening of the barrel component (51), and a filter (53) which covers the lower opening of the barrel component (51), and a lower cap component (54) which covers the lower opening of the barrel component (51) via the filter (53). The upper cap component (52) and lower cap component (54) close the upper opening and the lower opening of the barrel component (51), respectively. By this means, pressure can be applied to the space inside the extraction device (1) surrounded by the barrel component (51), the upper cap component (52), and the lower cap component (54).

The extraction device (1) is further provided with a rotating shaft (56) inserted into the inside of the barrel component (51) from the upper cap component (52). The rotating shaft (56) has rotating fins (58) and rotating shower nozzles (57). The rotating shower nozzles (57) are connected to treatment liquid flow path (10). A vertically moving rotation drive component (55) is connected to the rotating shaft (56). The rotating shaft (56) can be rotated by the vertically moving rotation drive component (55), and can also move up and down parallel to the side wall of the barrel component (51). The rotating fins (58) and the rotating shower nozzles (57) rotate inside the barrel component (51) accompanying the rotation of the rotating shaft (56). In addition, the rotating fins (58) and the rotating shower nozzles (57) move up and down inside the barrel component (51) accompanying the up and down movement of the rotating shaft (56).

A pressurized gas tank (59) is connected to the extraction device (1) via piping (21). The pressure inside the extraction device (1) can be raised and lowered by sending pressurizing gas into the extraction device (1) from the pressurized gas tank (59). As pressurizing gas, air and nitrogen gas, etc., can be employed. The piping (21) has a pressure sensor (31) and a valve (32). The pressure added to the atmospheric pressure inside the extraction device (1) can be measured by the pressure sensor (31). In addition, the pressure added to the atmospheric pressure inside the extraction device (1) can be regulated by a valve (32). For example, a pressure of at least 0.03 MPa and no more than 0.4 MPa in addition to atmospheric pressure is applied inside the extraction device (1).

After placing a plant starting material on a filter (53), pressure is applied inside the extraction device (1) from the pressurized gas tank (59). For example, when atmospheric pressure is 0.1 MPa, and a pressure of 0.03 MPa to 0.4 MPa is added from the pressurized gas tank (59), the pressure inside the extraction device (1) becomes 0.13 to 0.5 MPa. Pressure can be applied to the extent that the treatment liquid and liquid extract do not boil inside the extraction device (1). Permeation of treatment liquid into the plant starting material can be sped up by having a high pressure inside the extraction device (1). In addition, volatilization of fragrance constituents can be hindered by increased pressure.

Treatment liquid is poured onto the plant starting material from the rotating shower nozzles (57) from top to bottom. Shower speed is 0.5 to 3.3 m/hr, and preferably 1.4 to 3.3 m/hr, as linear velocity. The temperature of the treatment liquid is, for example, at least 90°C, or at least 100°C and no more than 150°C. When boiling is hindered by increased pressure, the temperature of the treatment liquid can be made higher. By pouring the treatment liquid onto the plant starting material during rotation of the rotating shower nozzles (57), the treatment liquid is poured evenly onto the plant starting material. The rotating fins (58) are used in order to stir the plant starting material immersed in treatment liquid.

The liquid extracted from the plant starting material after pouring on the treatment liquid passes through a filter (53), and is stored in the lower cap component (54) which functions as a receptacle for the liquid extract. The liquid extract stored in the lower cap component (54) is transferred to the buffer tank (6) shown in Figure 1, for temporarily storing the liquid extract, via flow path (11). Flow path (11) can have a liquid transfer pump (111) for transferring the liquid extract from the extraction device (1) to the buffer tank (6), the liquid extract can also be transferred from the extraction device (1) to the buffer tank (6) under gravity or pressure, etc. Flow path (11) linking the extraction device (1) and the buffer tank (6) can also have a heat exchanger, etc., in order to control the temperature of the treatment liquid.

The liquid extract stored in the buffer tank (6) is transferred to the liquid extract tank (2) via flow path (11). The liquid extract can be used, for example, in drinks, as starting material for drinks used diluted for drinking, and as a concentrate for drinks which are diluted for drinking. Flow path (11) has a liquid transfer pump (112) for transferring the liquid extract from the buffer tank (6) to the liquid extract tank (2). In addition, flow path (11) linking the buffer tank (6) and the liquid extract tank (2) can have a heat exchanger, etc., in order to control the temperature of the treatment liquid.

A first embodiment of the invention.

A process for producing tea according to a first embodiment of the present invention includes extracting a liquid extract from barley tea starting material under conditions of pressure, where at least 20 wt% of the barley tea starting material has a particle size of less than 1700 µm. It should be noted that the barley tea starting material can include unground barley tea starting material. The tea that is produced can be barley tea, or a tea blend of barley tea and other tea constituents. The process for producing tea according to this first embodiment is carried out by a liquid extract production system of the type shown in Figure 1 and described above. In extracting a liquid extract, a pressure of at least 0.03 MPa in addition to atmospheric pressure is applied inside the extraction device (1). A pressure such that the treatment liquid does not boil can be applied inside the extraction device (1). In addition, for example, in extracting a liquid extract, and treatment liquid of at least 90°C, or at least 100°C and no more than 150°C is poured onto barley tea starting material.

In the prior process for producing tea, percentage yield of solids is poor because the barley tea starting material is not ground, and pressure is not applied during extraction. Moreover, if a liquid extract is extracted from ground barley tea starting material under atmospheric pressure, the filter (53) inside the extraction device (1) becomes clogged. By contrast, with the process for producing tea according to the first embodiment of the invention, clogging of the filter (53) inside the extraction device (1) is suppressed by extracting a liquid extract from ground barley tea starting material under pressure; and it becomes possible to obtain liquid extract with a solids content with high yield, while maintaining intact the natural flavor. Moreover, extraction time also becomes shorter, so that it becomes possible to improve the efficiency of the extraction step.

Example 1 of the first embodiment of the invention.

A mesh with openings of 1700 µm (stainless steel experimental screen, JIS Z 8801, product code: 91-0726-3, Hayashi Kagaku Co., Ltd.) was used. In addition, 2 sets with 12.5 kg of barley tea starting material 98.8 wt% of which remained on the mesh when screened through this mesh and 12.5 kg of ground barley tea starting material 70.6 wt% of which remained on the mesh, were used.

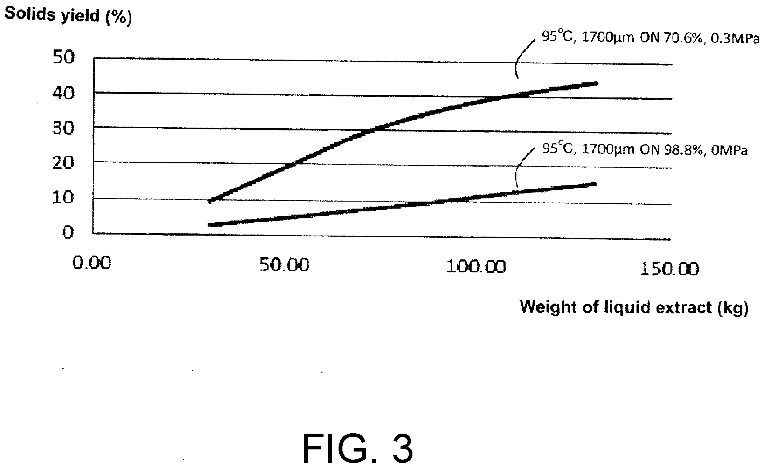

As shown in Figure 3, 139 kg of liquid extract was obtained by pouring hot water at 95°C onto barley tea starting material 98.8 wt% of which remained on the mesh, at atmospheric pressure. The solids yield obtained by dividing the solids content of the resulting liquid extract by 12.5 kg was 15.5%.

When hot water at 95°C was poured onto barley tea starting material 70.6 wt% of which remained on the mesh, at atmospheric pressure, the filter of the extraction device caused clogging, and it was impossible to obtain a liquid extract.

130 kg of liquid extract was obtained by pouring hot water at 95°C onto barley tea starting material 70.6 wt% of which remained on the mesh, at a pressure of 0.3 MPa in addition to atmospheric pressure. The solids yield obtained by dividing the solids content of the resulting liquid extract by 12.5 kg was 44.2%. This is equivalent to ca. 2.9 times the 15.5% above.

The results of Example 1 indicate that the solids yield is higher the finer the particle size of the barley tea starting material. The results of Example 1 also indicate that the solids yield is higher the higher the pressure when extracting barley tea.

Example 2 of the first embodiment of the invention.

12.5 kg of barley tea starting material 98.8 wt% of which remained on the mesh when applied to a screen with the same mesh as in Example 1, and 12.5 kg of ground barley tea starting material 70.6 wt% of which remained on the mesh, were used.

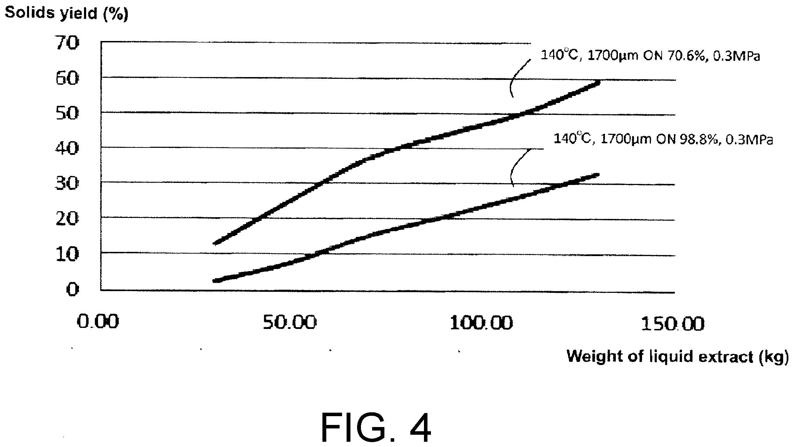

As shown in Figure 4, 139 kg of liquid extract was obtained by pouring hot water at 140°C onto barley tea starting material 98.8 wt% of which remained on the mesh, at a pressure of 0.3 MPa in addition to atmospheric pressure. The solids yield obtained by dividing the solids content of the resulting liquid extract by 12.5 kg was 33.1%.

139 kg of liquid extract was obtained by pouring hot water at 140°C onto barley tea starting material 70.6 wt% of which remained on the mesh, at a pressure of 0.3 MPa in addition to atmospheric pressure. The solids yield obtained by dividing the solids content of the resulting liquid extract by 12.5 kg was 59.2%.

The results of Example 2 indicate that the solids yield is higher the finer the particle size of the barley tea starting material. By comparison with the results of Example 1, the results of Example 2 also indicate that the solids yield is higher the higher the temperature of the treatment liquid when extracting barley tea.

Example 3 of the first embodiment.

Two sets of 12.5 kg of ground barley tea starting material 70.6 wt% of which remained on the mesh when applied to a screen with the same mesh as in Example 1, were used.

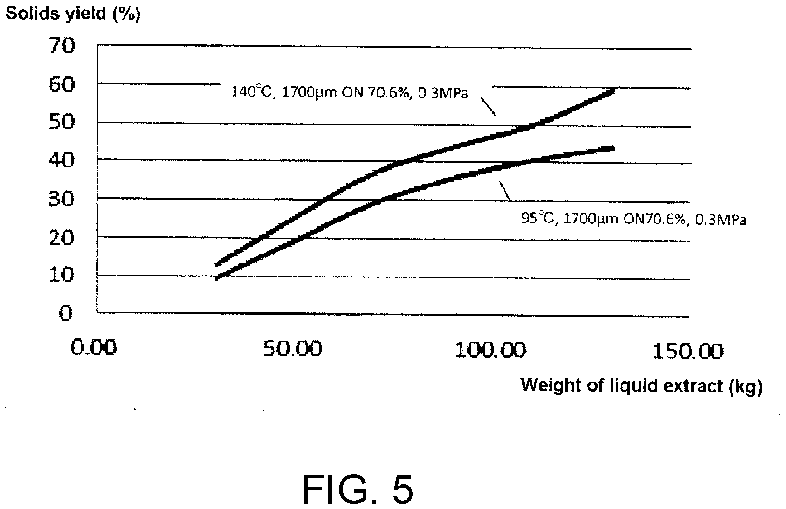

As shown in Figure 5, 130 kg of liquid extract was obtained by pouring hot water at 95°C onto barley tea starting material 70.6 wt% of which remained on the mesh, at a pressure of 0.3 MPa in addition to atmospheric pressure. The solids yield obtained by dividing the solids content of the resulting liquid extract by 12.5 kg was 44.2%.

139 kg of liquid extract was obtained by pouring hot water at 140°C onto barley tea starting material 70.6 wt% of which remained on the mesh, at a pressure of 0.3 MPa in addition to atmospheric pressure. The solids yield obtained by dividing the solids content of the resulting liquid extract by 12.5 kg was 59.2%.

The results of Example 3 indicate that the solids yield is higher the higher the temperature of the treatment liquid when extracting barley tea.

It should be apparent that the foregoing relates only to certain embodiments. Numerous changes and modifications may be made herein by one of ordinary skill in the art without departing from the scope of the invention as defined by the following claims.

## Claims

1. A process for producing tea, comprising extracting a liquid extract from a barley tea starting material under conditions of pressure on a filter (53) inside of an extraction device (1), where at least 20 wt% of the barley tea starting material has a particle size of less than 1700 µm, wherein in extracting the liquid extract, a pressure of 0.03 MPa to 0.4 MPa in addition to atmospheric pressure is applied inside the extraction device (1), and a treatment liquid at 90°C to 150°C is poured onto the barley tea starting material.

2. The process for producing tea as claimed in any preceding claim, wherein in extracting the liquid extract, pressure is applied inside an extraction device (1) such that the treatment liquid docs not boil.

3. The process for producing tea as claimed in any preceding claim, wherein the tea produced is a barley tea or a blended tea.

4. The process for producing tea as claimed in any preceding claim, wherein the barley tea starting material comprises an unground barley tea starting material.

## Patentansprüche

1. Verfahren zur Herstellung von Tee, umfassend Extrahieren eines flüssigen Extrakts aus einem Gerstentee-Ausgangsmaterial unter Bedingungen von Druck auf einen Filter (53) innerhalb einer Extraktionsvorrichtung (1), wobei wenigstens 20 Gew.-% des Gerstentee-Ausgangsmaterials eine Partikelgröße von weniger als 1700 µm aufweist, wobei bei der Extraktion des flüssigen Extrakts ein Druck von 0,03 MPa bis 0,4 MPa zusätzlich zu atmosphärischem Druck innerhalb der Extraktionsvorrichtung (1) angewendet wird und eine Behandlungsflüssigkeit mit 90 °C bis 150 °C auf das Gerstentee-Ausgangsmaterial gegossen wird.

2. Verfahren zur Herstellung von Tee gemäß dem vorstehenden Anspruch, wobei bei der Extraktion des flüssigen Extrakts Druck innerhalb einer Extraktionsvorrichtung (1) angewendet wird, so dass die Behandlungsflüssigkeit nicht siedet.

3. Verfahren zur Herstellung von Tee gemäß einem der vorstehenden Ansprüche, wobei der hergestellte Tee ein Gerstentee oder ein gemischter Tee ist.

4. Verfahren zur Herstellung von Tee gemäß einem der vorstehenden Ansprüche, wobei das Gerstentee-Ausgangsmaterial ein ungemahlenes Gerstentee-Ausgangsmaterial umfasst.

## Revendications

1. Procédé pour la production de thé, comprenant une extraction d'un extrait liquide d'une matière première de thé d'orge dans des conditions de pression sur un filtre (53) à l'intérieur d'un dispositif d'extraction (1), où au moins 20 % en poids de la matière première de thé d'orge possède une taille de particule inférieure à 1 700 µm, dans lequel dans l'extraction de l'extrait liquide, une pression de 0,03 MPa à 0,4 MPa en plus de la pression atmosphérique est appliquée à l'intérieur du dispositif d'extraction (1), et un liquide de traitement à une température de 90 °C à 150 °C est versé sur la matière première de thé d'orge.

2. Procédé pour la production de thé selon la revendication précédente, dans lequel dans l'extraction de l'extrait liquide, une pression est appliquée à l'intérieur d'un dispositif d'extraction (1) de sorte que le liquide de traitement ne bouille pas.

3. Procédé pour la production de thé selon une quelconque revendication précédente, le thé produit étant un thé d'orge ou un thé mélangé.

4. Procédé pour la production de thé selon une quelconque revendication précédente, la matière première de thé d'orge comprenant une matière première de thé orge non broyée.
